# EUROPEAN PATENT APPLICATION

(11) **EP 4 614 411 A1**
(43) Date of publication of application: **10.09.2025**
(21) Application number: 25161620.7
(22) Date of filing: 04.03.2025
(51) Int. Cl.: G06Q 10/0637, G06N 20/00

(54) **INFORMATION PROVIDING APPARATUS, INFORMATION PROVIDING METHOD, AND INFORMATION PROVIDING PROGRAM**

(30) Priority: 06.03.2024 JP 2024034410
(71) Applicant: Yokogawa Electric Corporation, Tokyo 180-8750 (JP)
(72) Inventor: SHIRASUNA, Miyori, Musashino-shi, Tokyo, 180-8750, (JP); OKAMOTO, Hiromi, Musashino-shi, Tokyo, 180-8750, (JP); LIU, Zhuo, Musashino-shi, Tokyo, 180-8750, (JP); KANOKOGI, Hiroaki, Musashino-shi, Tokyo, 180-8750, (JP)
(74) Representative: Winter, Brandl - Partnerschaft mbB

(57) **Abstract**

A server device (10) receives a management policy indicating a course of action of overall management of an organization to be managed, from a person in charge of the organization, analyzes the management policy received and on-site data collected from each hierarchical layer of the organization to be managed, generates an on-site policy indicating a course of action of management of each hierarchical layer of the organization to be managed, and notifies each on-site person in charge in each hierarchical layer in the organization to be managed, of the on-site policy generated.

## Description

### FIELD

The present invention relates to an information providing apparatus, an information providing method, and an information providing program.

### BACKGROUND

Promotion of smart factories (SFs) in the manufacturing industry has been sought for as one of work-style reforms promoted by the Japanese Government. The Five Layer Process Manufacturing Pyramid (PMP) is an important concept in the promotion of smart factories.

Patent Literature 1: Japanese Laid-open Patent Publication No. 2023-123016

However, in the manufacturing industry, reflecting management policies of a person in charge of an organization, in on-site people in charge in respective hierarchical layers of the organization to be managed is difficult. For example, in the manufacturing industry, on-site data from sites are often accumulated and managed independently in units of hierarchical layers, and cross-hierarchically analyzing hierarchical layers of a five layer process manufacturing pyramid is thus difficult.

The present invention has been made in view of the above and an object thereof is to reflect management policies of a person in charge of an organization, in each hierarchical layer of the organization to be managed.

### SUMMARY

According to an aspect of the embodiments, an information providing apparatus, includes a reception unit that receives a first management policy indicating a course of action of overall management of an organization to be managed, from a person in charge of the organization, an analysis unit that analyzes the first management policy received and first on-site data collected from each hierarchical layer of the organization to be managed, and generates a first on-site policy indicating a course of action of management of the each hierarchical layer, and a notification unit that notifies each on-site person in charge in the each hierarchical layer, of the first on-site policy generated.

According to an aspect of the embodiments, an information providing method, wherein a computer executes processing includes receiving a first management policy indicating a course of action of overall management of an organization to be managed, from a person in charge of the organization, analyzing the first management policy received and first on-site data collected from each hierarchical layer of the organization to be managed, and generating a first on-site policy indicating a course of action of management of the each hierarchical layer, and notifying each on-site person in charge in the each hierarchical layer, of the first on-site policy generated.

According to an aspect of the embodiments, an information providing program that causes a computer to execute processing includes receiving a first management policy indicating a course of action of overall management of an organization to be managed, from a person in charge of the organization, analyzing the first management policy received and first on-site data collected from each hierarchical layer of the organization to be managed, and generating a first on-site policy indicating a course of action of management of the each hierarchical layer, and notifying each on-site person in charge in the each hierarchical layer, of the first on-site policy generated.

### BRIEF DESCRIPTION OF THE DRAWINGS

FIG. 1 is a diagram illustrating an example of a configuration of and an example of processing by a decision making support system according to an embodiment;
FIG. 2 is a block diagram illustrating an example of a configuration of a server device of the decision making support system according to the embodiment;
FIG. 3 is a diagram illustrating an example of an on-site data storage unit of the server device according to the embodiment;
FIG. 4 is a diagram illustrating an example of an analysis result storage unit of the server device according to the embodiment;
FIG. 5 is a diagram illustrating an example of an analysis model storage unit of the server device according to the embodiment;
FIG. 6 is a flowchart illustrating an example of a flow of processing by the decision making support system according to the embodiment; and
FIG. 7 is a diagram illustrating an example of a hardware configuration according to the embodiment.

### DETAILED DESCRIPTION OF THE PREFERRED EMBODIMENTS

An information providing apparatus, an information providing method, and an information providing program, according to an embodiment of the present invention will hereinafter be described in detail by reference to the drawings. The present invention is not to be limited by the embodiment described hereinafter.

The following description is on a configuration of and processing by a decision making support system 100 according to an embodiment, a configuration and processing by each apparatus in the decision making support system 100, a flow of processing by the decision making support system 100, and effects of the embodiment.

### 1. Configuration of and Processing by Decision Making Support System 100

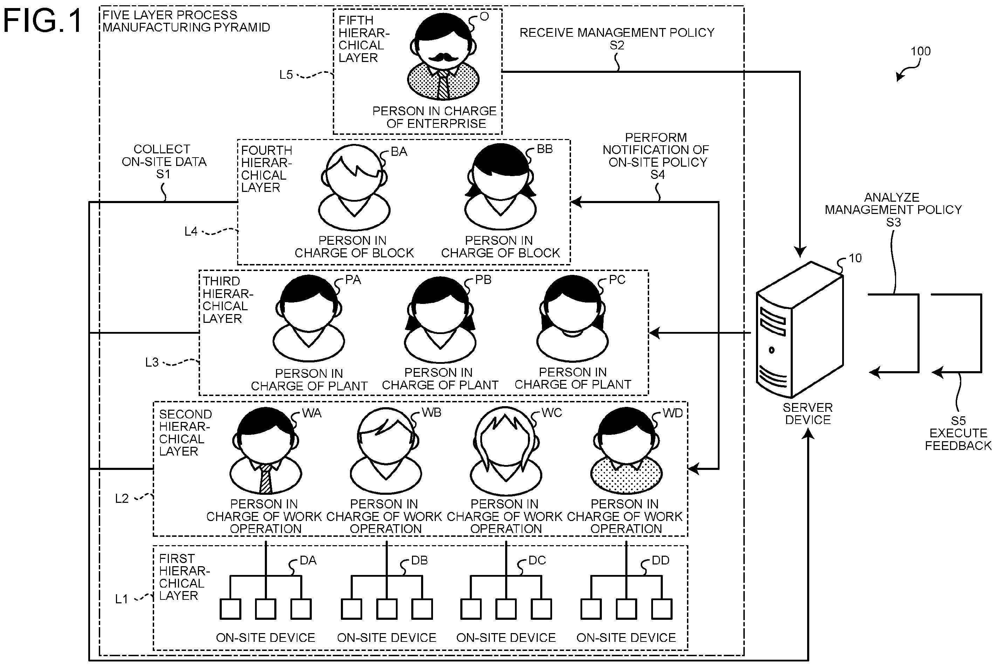

The configuration of and the processing by the decision making support system 100 according to the embodiment will be described in detail by use of FIG. 1. FIG. 1 is a diagram illustrating an example of the configuration of and an example of the processing by the decision making support system 100 according to the embodiment. The following description is on an example of the overall configuration of the decision making support system 100, an example of the overall processing by the decision making support system 100, and effects of the decision making support system 100.

Business management of a manufacturing enterprise will be described as an example with respect to this embodiment, but the organization to be managed and the type of management are not particularly limited. For example, management of an organization may be management of an administrative organization or a non-profit organization.

### 1-1. Example of Overall Configuration of Decision Making Support System 100

The following description is on the example of the overall configuration of the decision making support system 100. The decision making support system 100 has a server device 10 and a five layer process manufacturing pyramid (L1, L2, L3, L4, and L5). The server device 10 and each terminal or device (not illustrated in the drawings) in the five layer process manufacturing pyramid are communicably connected by wire or wirelessly via a predetermined communication network not illustrated in the drawings. Any of various communication networks, such as the Internet and a dedicated line, may be adopted as the predetermined communication network.

### 1-1-1. Server device 10

The server device 10 is an information providing apparatus that analyzes management policies that have been received and generates on-site policies for each hierarchical layer. For example, the server device 10 is implemented by a cloud environment, an on-premise environment, or an edge environment. The decision making support system 100 illustrated in FIG. 1 may include a plurality of the server devices 10.

### 1-1-2. Five Layer Process Manufacturing Pyramid

The five layer process manufacturing pyramid is a business organization to be managed in the manufacturing industry, the business organization including hierarchical layers. A fifth hierarchical layer L5 including a person O in charge of the enterprise, a fourth hierarchical layer L4 including people B (BA and BB) in charge of blocks, a third hierarchical layer L3 including people P (PA, PB, and PC) in charge of plants, a second hierarchical layer L2 including people W (WA, WB, WC, and WD) in charge of work operations, and a first hierarchical layer L1 including on-site devices will hereinafter be described as the hierarchical layers of the five layer process manufacturing pyramid. The example in FIG. 1 has five hierarchical layers as the hierarchical layers of the five layer process manufacturing pyramid, but the number of the hierarchical layers is not particularly limited. The people in charge in the hierarchical layers of the five layer process manufacturing pyramid excluding the fifth hierarchical layer L5 may be referred to herein as the "on-site people in charge". Furthermore, the hierarchical layers of the five layer process manufacturing pyramid excluding the fifth hierarchical layer L5 may simply be referred to herein as the "sites".

### 1-1-2-1. Fifth Hierarchical layer L5

The fifth hierarchical layer L5 is a hierarchical layer that determines management policies and manages its lower hierarchical layers, which are the fourth hierarchical layer L4, the third hierarchical layer L3, the second hierarchical layer L2, and the first hierarchical layer L1. For example, the fifth hierarchical layer L5 is a hierarchical layer that is related to strategic management and business analysis and that manages the whole organization and implements decision making for the whole organization.

In the example of FIG. 1, the fifth hierarchical layer L5 is a hierarchical layer of the five layer process manufacturing pyramid, the hierarchical layer including the person O in charge of the enterprise who is a person in charge of the organization of the manufacturing enterprise. The fifth hierarchical layer L5 may have an enterprise manager terminal (not illustrated in the drawings) used by the person O in charge of the enterprise. Furthermore, the person O in charge of the enterprise is not necessarily the board chairman, the president, or the CEO, and may be an executive, a CTO, or a CFO, for example.

### 1-1-2-2. Fourth Hierarchical Layer L4

The fourth hierarchical layer L4 is a hierarchical layer that is managed by its upper hierarchical layer, which is the fifth hierarchical layer L5, and that manages its lower hierarchical layers, which are the third hierarchical layer L3, the second hierarchical layer L2, and the first hierarchical layer L1. For example, the fourth hierarchical layer L4 is a hierarchical layer that manages organizational resources related to material management (MM), supply chain management (SCM), sales management, human capital management (HCM), facility management (FM), and raw material management, for example, and that implements enterprise resource planning (ERP).

In the example of FIG. 1, the fourth hierarchical layer L4 is a hierarchical layer of the five layer process manufacturing pyramid, the hierarchical layer including the people B (BA and BB) in charge of blocks who are people each in charge of a regional block including plural plants. The fourth hierarchical layer L4 may have block manager terminals (not illustrated in the drawings) used by the people B in charge of blocks.

### 1-1-2-3. Third Hierarchical Layer L3

The third hierarchical layer L3 is a hierarchical layer that is managed by its upper hierarchical layers, which are the fifth hierarchical layer L5 and the fourth hierarchical layer L4, and that manages its lower hierarchical layers, which are the second hierarchical layer L2 and the first hierarchical layer L1. For example, the third hierarchical layer L3 is a hierarchical layer that manages the whole manufacturing facilities related to production management and system integration (SI) and implements a manufacturing execution system.

In the example of FIG. 1, the third hierarchical layer L3 is a hierarchical layer of the five layer process manufacturing pyramid, the hierarchical layer including the people P (PA, PB, and PC) in charge of plants who are people in charge of the plants. The third hierarchical layer L3 may have plant manager terminals (not illustrated in the drawings) used by the people P in charge of plants.

### 1-1-2-4. Second Hierarchical Layer L2

The second hierarchical layer L2 is a hierarchical layer that is managed by its upper hierarchical layers, which are the fifth hierarchical layer L5, the fourth hierarchical layer L4, and the third hierarchical layer L3, and that manages its lower hierarchical layer, which is the first hierarchical layer L1. For example, the second hierarchical layer L2 is a hierarchical layer that manages manufacturing lines and implements a distributed control system (DCS) or a process control system (PCS).

In the example of FIG. 1, the second hierarchical layer L2 is a hierarchical layer of the five layer process manufacturing pyramid, the hierarchical layer including the people W (WA, WB, WC, and WD) in charge of work operations who are people in charge of manufacturing sites including plural on-site devices. The second hierarchical layer L2 may have work operation manager terminals (not illustrated in the drawings) used by the people W in charge of work operations or control devices (not illustrated in the drawings) that control the on-site devices in the first hierarchical layer L1.

### 1-1-2-5. First Hierarchical Layer L1

The first hierarchical layer L1 is a hierarchical layer that is managed by its upper hierarchical layers, which are the fifth hierarchical layer L5, the fourth hierarchical layer L4, the third hierarchical layer L3, and the second hierarchical layer L2, and that executes manufacturing processes. For example, the first hierarchical layer L1 is a hierarchical layer that manages manufacturing work operation sites and includes various on-site devices D.

In the example of FIG. 1, the first hierarchical layer L1 is a hierarchical layer of the five layer process manufacturing pyramid, the hierarchical layer including the plural on-site devices D (DA, DB, DC, and DD). The on-site devices D are, for example, sensor devices, communication devices, and actuators, but are not particularly limited.

### 1-2. Example of Overall Processing by Decision Making Support System 100

The following description is on the example of the overall processing by the decision making support system 100. Processing from Steps S1 to S5 described below may be executed in a different sequence. Furthermore, part of the processing from Steps S1 to S5 described below may be omitted.

### 1-2-1. On-site Data Collection Processing

Firstly, the server device 10 collects on-site data from each hierarchical layer (Step S1). For example, the server device 10 collects on-site data of the fourth hierarchical layer L4 from the block manager terminals of the people B (BA and BB) in charge of blocks. Furthermore, the server device 10 collects on-site data of the third hierarchical layer L3 from the plant manager terminals of the people P (PA, PB, and PC) in charge of plants. Furthermore, the server device 10 collects on-site data of the second hierarchical layer L2 from the work operation manager terminals of the people W (WA, WB, WC, and WD) in charge of work operations. Furthermore, the server device 10 may collect on-site data of the first hierarchical layer L1 from the on-site devices D (DA, DB, DC, and DD).

The on-site data are data indicating management states of the hierarchical layers of the organization to be managed excluding the hierarchical layer including the person in charge of the organization, the data being on, for example: costs, such as raw material costs, labor costs, and fuel and lighting costs; amounts of raw materials in stock; production volumes of products; and plant utilization rates, but may be any data indicating states related to one-site management of the organization to be managed, without being particularly limited.

### 1-2-2. Management Policy Reception Processing

Secondly, the server device 10 receives management policies from the person O in charge of the enterprise (Step S2). For example, the server device 10 receives management policies that have been determined by the person O in charge of the enterprise and transmitted by the enterprise manager terminal of the person O in charge of the enterprise.

The management policies are management targets indicating courses of action of the overall management of the organization to be managed and include, for example, a revenue target for the whole enterprise, a target profit margin, a target production volume of a product, and/or a target value for cost reduction, but may include any target related to the overall management of the organization to be managed, without being particularly limited.

### 1-2-3. Management Policy Analysis Processing

Thirdly, the server device 10 makes an analysis of the management policies (Step S3). For example, the server device 10 makes an analysis of the management policies and the on-site data and generates on-site policies to be presented to the on-site people in charge in the hierarchical layers.

The on-site policies are management targets indicating courses of action of management of the sites of the organization to be managed excluding the hierarchical layer including the person in charge of the organization, and are, for example, revenue targets, target profit margins, target production volumes of products, and/or target values for cost reduction, for the hierarchical layers of the five layer process manufacturing pyramid, but may include any targets related to the management of the sites of the organization to be managed, without being particularly limited.

The server device 10 may adopt, as a technique for the analysis, analysis using machine learning (ML) or artificial intelligence (AI), basic statistics, multivariate analysis, data mining, analysis using an algorithm that executes ERP, or feedback analysis using reinforcement learning, for example.

### 1-2-4. On-Site Policy Notification Processing

Fourthly, the server device 10 notifies the hierarchical layers of the on-site policies (Step S4). For example, the server device 10 transmits on-site policies for the fourth hierarchical layer L4 to the block manager terminals of the people B (BA and BB) in charge of blocks. Furthermore, the server device 10 transmits on-site policies for the third hierarchical layer L3 to the plant manager terminals of the people P (PA, PB, and PC) in charge of plants. Furthermore, the server device 10 transmits on-site policies for the second hierarchical layer L2 to the work operation manager terminals of the people W (WA, WB, WC, and WD) in charge of work operations.

### 1-2-5. On-Site Data Feedback Processing

Fifthly, the server device 10 performs feedback of on-site data (Step S5). For example, the server device 10 collects the latest on-site data from each hierarchical layer managed according to the on-site policies and transmits the latest on-site data collected to the enterprise manager terminal of the person O in charge of the enterprise in the fifth hierarchical layer L5. Furthermore, the server device 10 analyzes the latest on-site data collected and notifies the on-site people in charge in each hierarchical layer of up-to-date on-site policies including any improvement to be made in management of the hierarchical layer. Furthermore, in a case where the person O in charge of the enterprise has changed the management policies, the server device 10 receives up-to-date management policies, analyzes the up-to-date management policies and the latest on-site data, and notifies the on-site people in charge in each hierarchical layer of up-to-date on-site policies.

### 1-3. Effects of Decision Making Support System 100

An outline, application examples, and effects of the decision making support system 100 will hereinafter be described after description of an outline of and problems in a decision making support system 100P according to a reference technique.

### 1-3-1. Outline of Decision Making Support System 100P

The decision making support system 100P according to the reference technique is related to a technique for providing inventory control using safety stock levels and reorder points corresponding to variation in demand (transaction volumes), the technique including: calculating a safety stock by multiplying the mean transaction volume of an article in a predetermined time period by a first coefficient corresponding to a safety stock level indicating the minimum stock level for the same article, the safety stock level having been set on the basis of actual transactions made in the past; and calculating a reorder point by multiplying the mean transaction volume of the same article in a predetermined time period by a second coefficient corresponding to a reorder point indicating a stock level at which an order is to be placed, the reorder point having been set on the basis of actual transactions made in the past.

### 1-3-2. Problems in Decision Making Support System 100P

However, the decision making support system 100P has the following problems. The following description is on a first problem, a second problem, and a third problem in the decision making support system 100P.

### 1-3-2-1. First Problem

Firstly, the range of application of the decision making support system 100P is centered on supply chains, and the decision making support system 100P only has the visualization function related to the present stock levels and does not have a prediction function or a warning function, and indication from the result of the analysis is just at a basic counting level. Furthermore, the decision making support system 100P has not been adopted in ERP or manufacturing.

### 1-3-2-2. Second Problem

Secondly, the decision making support system 100P does not enable plural hierarchical layers to be cross-hierarchically analyzed by use of data from a five layer process manufacturing pyramid and on-site policies of the hierarchical layers are individually formulated. That is, the decision making support system 100P does not allow a person O in charge of an enterprise to effectively cause management policies to be reflected.

The Five Layer Process Manufacturing Pyramid is a concept that was devised in connection with the promotion of smart factories in the manufacturing industry, but has not sufficiently come into wide use and its introduction is still in the stage of being considered. However, at sites in the manufacturing industry, although data accumulation has advanced with the progress of Digital Twin (DT) and Digital Transformation (DX), in many cases, the amount of accumulation needed for analysis in units of hierarchical layers has not been achieved.

Furthermore, even in a case where the data accumulation has been achieved in the decision making support system 100P, the data are often accumulated and managed independently in units of hierarchical layers and cross-hierarchical analysis over upper and lower hierarchical layers is often not performed. Therefore, use of on-site data in each hierarchical layer in the decision making support system 100P is limited to basic counting and visualization. Furthermore, analysis of on-site data in each hierarchical layer in the decision making support system 100P is limited to answer checking based on empirical rules. Furthermore, analysis is executed in each hierarchical layer of the five layer process manufacturing pyramid in the decision making support system 100P and data are thus processed and interpreted differently among the hierarchical layers.

### 1-3-2-3. Third Problem

Thirdly, in the decision making support system 100P, when on-site data of each hierarchical layer are analyzed by use of machine learning or artificial intelligence, for example, large-scale data processing and tuning, as well as semiautomatic analysis in combination with manual operation are needed, utilization of results of analysis is often temporary, and autonomous analysis has not been achieved.

Even in a case where the data accumulation is implemented in the decision making support system 100P, on-site data within each hierarchical layer of the five layer process manufacturing pyramid are not subjected to integrated accumulation and management and analysis of on-site data using machine learning or artificial intelligence is rarely executed.

When analysis of on-site data in the manufacturing industry is executed using machine learning or artificial intelligence in the decision making support system 100P, a considerable amount of data is needed and preprocessing of the data, including large-scale data maintenance and cleansing, is additionally needed.

Furthermore, analysis using machine learning or artificial intelligence in the decision making support system 100P enables temporary presentation of an analysis result for a problem but does not enable continuous analysis for a problem. Furthermore, autonomous analysis is needed for execution of continuous analysis for a problem in the decision making support system 100P but autonomous analysis requires robust machine learning or reinforcement learning using artificial intelligence, for example, and thus requires advanced technology. Furthermore, analysis by the decision making support system 100P lacks versatility.

### 1-3-3. Outline of Decision Making Support System 100

The following processing is executed in the decision making support system 100. Firstly, the server device 10 collects on-site data from each hierarchical layer of the five layer process manufacturing pyramid. Secondly, the server device 10 receives management policies from the person O in charge of the enterprise. Thirdly, the server device 10 performs analysis of the management policies. In this analysis, the server device 10 executes analysis of the management policies and the on-site data by ERP or reinforcement learning and generates on-site policies to be presented to the on-site people in charge in the hierarchical layers. Fourthly, the server device 10 notifies each hierarchical layer in the five layer process manufacturing pyramid of the on-site policies. Fifthly, the server device 10 performs feedback of on-site data. In this feedback, the server device 10 notifies the person O in charge of the enterprise of the latest on-site data of each hierarchical layer that has been managed according to the on-site policies and performs analysis of management policies again.

### 1-3-4. Application Examples of Decision Making Support System 100

The following application examples are possible for the decision making support system 100. The following description is on a first application example, a second application example, and a third application example for the decision making support system 100.

### 1-3-4-1. First Application Example

Firstly, utilization of various data is enabled in the decision making support system 100 by association of the various data with: a part list database, typically a bill of materials (BOM), used in the manufacturing industry; and a database customized or developed in-house, the database being similar to the part list database.

### 1-3-4-2. Second Application Example

Secondly, in the decision making support system 100, utilization of various data is enabled by association of the various data with an accounting system, a physical distribution system, and a sales system, which are typically a mission-critical system package or business package software, and also with systems for customer relational management (CRM) and supply chain management, for example.

### 1-3-4-3. Third Application Example

Thirdly, the decision making support system 100 also enables utilization of various data managed and saved by means of a spreadsheet program, files in the comma-separated values (CSV) format, or text data files similar to these files, through association.

### 1-3-5. Effects of Decision Making Support System 100

The decision making support system 100 has the following effects. The following description is on first to fourth effects of the decision making support system 100.

### 1-3-5-1. First Effect

Firstly, the decision making support system 100 enables cross-hierarchical notification of on-site policies to the hierarchical layers of the five layer process manufacturing pyramid and thus enables flexible reflection of management policies determined by the person O in charge of the enterprise in the respective hierarchical layers. In this notification, the decision making support system 100 may also notify the hierarchical layers of various alerts.

### 1-3-5-2. Second Effect

Secondly, the decision making support system 100 enables presentation of optimum on-site policies from past on-site data by analysis using, for example, reinforcement learning. In presenting the on-site policies, the decision making support system 100 enables use of on-site data accumulated or managed in each hierarchical layer as is and no change is needed in the data management method for the decision making support system 100P. Furthermore, the decision making support system 100 does not require a large amount of on-site data and enables analysis by use of on-site data corresponding to about one year that is the most recent.

### 1-3-5-3. Third Effect

Thirdly, the decision making support system 100 enables cross-hierarchical analysis of the hierarchical layers of the five layer process manufacturing pyramid on the basis of management policies determined by the person O in charge of the enterprise. In this analysis, the decision making support system 100 also enables reflection of any change in the management policies in on-site policies and thus enables adaptation to a change of the person O in charge of the enterprise.

### 1-3-5-4. Fourth Effect

Fourthly, the decision making support system 100 enables robust autonomous analysis to be executed by machine learning or artificial intelligence and thus enables control of the latest on-site states in the five layer process manufacturing pyramid by feedback. In this control, the decision making support system 100 enables adjustment or partial change of the on-site policies, for example, by the feedback. Furthermore, in the decision making support system 100, outputting the feedback in the form of graphs facilitates visual understanding by the person O in charge of the enterprise and enables effective support for presentation of appropriate instructions, policies, and plans, for example, to the hierarchical layers of the five layer process manufacturing pyramid by the person O in charge of the enterprise.

As described above, the decision making support system 100 enables reflection of management policies of a person in charge of an organization in each hierarchical layer of the organization to be managed.

### 2. Configuration of and Processing by Server device 10 of Decision Making Support System 100

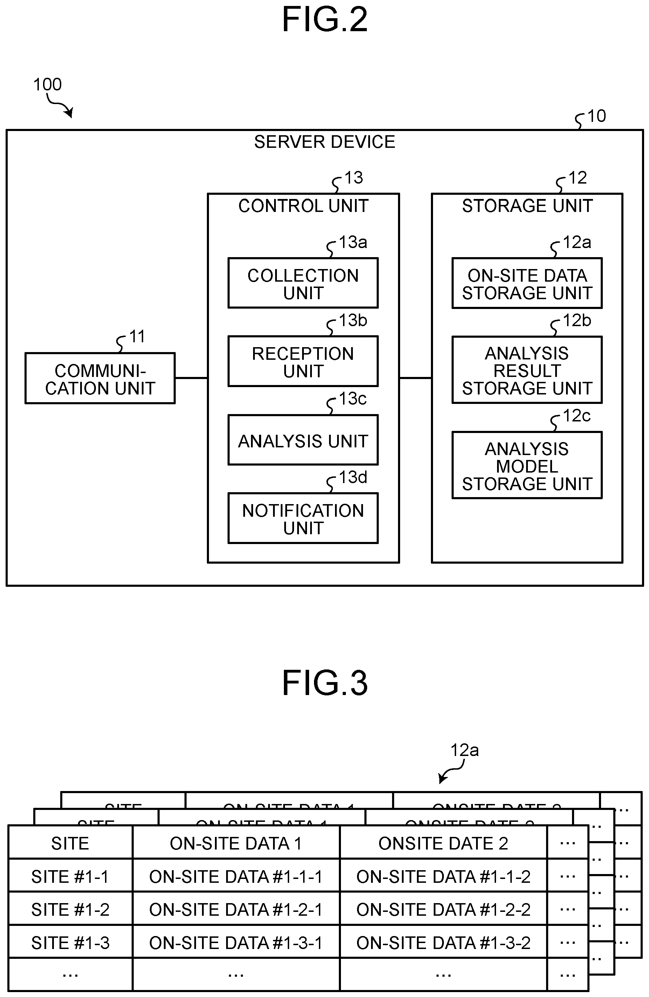

A configuration of and processing by each apparatus that the decision making support system 100 illustrated in FIG. 1 has will be described by use of FIG. 2. FIG. 2 is a block diagram illustrating an example of a configuration of the server device 10 in the decision making support system 100 according to the embodiment. An example of the overall configuration of the decision making support system 100 according to the embodiment will hereinafter be described first and the example of the configuration of and an example of processing by the server device 10 will thereafter be described in detail.

### 2-1. Example of Overall Configuration of Decision Making Support System 100

The example of the overall configuration of the decision making support system 100 illustrated in FIG. 1 will be described by use of FIG. 2. As illustrated in FIG. 2, the decision making support system 100 has the server device 10. The server device 10, and each terminal (not illustrated in the drawings) and each device (not illustrated in the drawings) in the five layer process manufacturing pyramid are communicably connected by a communication network N implemented by the Internet or a dedicated line, for example. The server device 10 is installed in a cloud environment, an on-premise environment, or an edge environment, for example.

The terminals in the five layer process manufacturing pyramid include, for example, the enterprise manager terminal used by the person O in charge of the enterprise, the block manager terminals used by the people B in charge of blocks, the plant manager terminals used by the people P in charge of plants, and the work operation manager terminals used by the people W in charge of work operations. The devices in the five layer process manufacturing pyramid include, for example, the on-site devices D, such as sensor devices, communication devices, and actuators, and databases that store on-site data of the hierarchical layers.

### 2-2. Example of Configuration of and Example of Processing by Server device 10

The example of the configuration of and the example of the processing by the server device 10 will be described by use of FIG. 2. The server device 10 is an information providing apparatus and has a communication unit 11, a storage unit 12, and a control unit 13. The server device 10 may have an input unit (for example, a keyboard and a mouse) that receives various types of operation from an administrator of the decision making support system 100 and a display unit (for example, a liquid crystal display) for displaying various kinds of information.

### 2-2-1. Communication Unit 11

The communication unit 11 governs data communication to and from other apparatuses. For example, the communication unit 11 performs data communication to and from each communication device via a router. The communication unit 11 is also capable of performing data communication to and from any terminal not illustrated in the drawings.

### 2-2-2. Storage Unit 12

The storage unit 12 stores various kinds of information referred to when the control unit 13 operates, and various kinds of information obtained when the control unit 13 operates. The storage unit 12 has an on-site data storage unit 12a, an analysis result storage unit 12b, and an analysis model storage unit 12c. The storage unit 12 is implemented by, for example: a semiconductor memory element, such as a random access memory (RAM) or a flash memory; or a storage device, such as a hard disk or an optical disk. In the example of FIG. 2, the storage unit 12 is installed inside the server device 10 but the storage unit 12 may be installed outside the server device 10, and more than one storage unit may also be installed.

### 2-2-2-1. On-Site Data Storage Unit 12a

The on-site data storage unit 12a stores on-site data. For example, the on-site data storage unit 12a stores on-site data collected by a collection unit 13a of the control unit 13 described later. An example of data stored in the on-site data storage unit 12a will now be described by use of FIG. 3. FIG. 3 is a diagram illustrating an example of the on-site data storage unit 12a of the server device 10 according to the embodiment. In the example of FIG. 3, the on-site data storage unit 12a has items, such as "site" and "on-site data".

"Site" indicates identification information for identifying the hierarchical layers of the organization to be managed, the hierarchical layers excluding the hierarchical layer including the person in charge of the organization, and corresponds to, for example, identification numbers or identification symbols of the hierarchical layers. For example, the organization to be managed herein belongs to the manufacturing industry. The hierarchical layers belong to, for example, the five layer process manufacturing pyramid. "On-site data" are data indicating management states of the hierarchical layers of the organization to be managed, the hierarchical layers excluding the hierarchical layer including the person in charge of the organization, the data being on, for example: costs, such as raw material costs, labor costs, and fuel and lighting costs; and actual figures, such as amounts of raw materials in stock, production volumes of products, and plant utilization rates.

That is, FIG. 3 illustrates an example where the on-site data storage unit 12a stores data, such as: {on-site data 1: "on-site data #1-1-1", on-site data 2: "on-site data #1-1-2", ...} for a site identified by "site #1-1"; {on-site data 1: "on-site data #1-2-1", on-site data 2: "on-site data #1-2-2", ...} for a site identified by "site #1-2"; {on-site data 1: "on-site data #1-3-1", on-site data 2: "on-site data #1-3-2", ...} for a site identified by "site #1-3"; ....

### 2-2-2-2. Analysis Result Storage Unit 12b

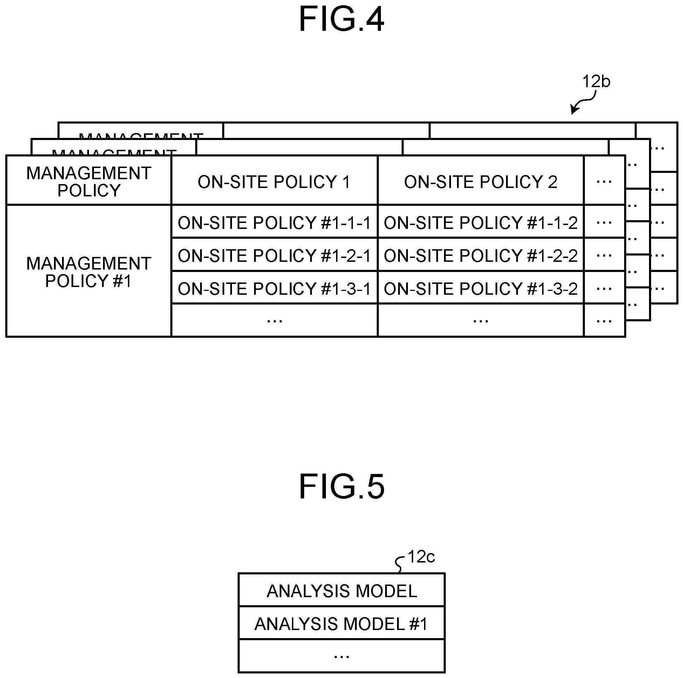

The analysis result storage unit 12b stores analysis results. For example, the analysis result storage unit 12b stores analysis results output by an analysis unit 13c of the control unit 13 described later. An example of data stored by the analysis result storage unit 12b will now be described by use of FIG. 4. FIG. 4 is a diagram illustrating an example of the analysis result storage unit 12b of the server device 10 according to the embodiment. In the example of FIG. 4, the analysis result storage unit 12b has items, such as "management policy" and "on-site policy".

"Management policy" indicates identification information for identifying management targets indicating courses of action for overall management of the organization to be managed, and corresponds to, for example, identification numbers or identification symbols of management policies determined by the person O in charge of the enterprise. "On-site policy" corresponds to management targets indicating courses of action of management of the sites of the organization to be managed excluding the hierarchical layer including the person in charge of the organization, and corresponds to, for example, numerical targets, such as revenue targets, target profit margins, target production volumes of products, and target values for cost reduction, for the respective hierarchical layers of the five layer process manufacturing pyramid.

That is, FIG. 4 illustrates an example where the analysis result storage unit 12b stores data, such as: {on-site policy 1: "on-site policy #1-1-1", on-site policy 2: "on-site policy #1-1-2", ...}; { on-site policy 1: "on-site policy #1-2-1", on-site policy 2: "on-site policy #1-2-2", ...}; { on-site policy 1: "on-site policy #1-3-1", on-site policy 2: "on-site policy #1-3-2", ...}; ..., for a management policy identified by "management policy #1".

### 2-2-2-3. Analysis Model Storage Unit 12c

The analysis model storage unit 12c stores analysis models M. For example, the analysis model storage unit 12c stores the analysis models M that are models used by an analysis unit 13c of the control unit 13 described later. An example of data stored by the analysis model storage unit 12c will now be described by use of FIG. 5. FIG. 5 is a diagram illustrating an example of the analysis model storage unit 12c of the server device 10 according to the embodiment. In the example of FIG. 5, the analysis model storage unit 12c has an item, such as "analysis model".

"Analysis model" corresponds to model data on machine learning models and corresponds to, for example, data including: execution data for executing algorithms of reinforcement learning; and various parameters.

FIG. 5 illustrates an example where the analysis model storage unit 12c stores machine learning models of the analysis models M, such as "analysis model #1", ....

### 2-2-3. Control Unit 13

The control unit 13 governs the overall control of the server device 10. The control unit 13 has the collection unit 13a, a reception unit 13b, the analysis unit 13c, and a notification unit 13d. The control unit 13 may be implemented by, for example: an electronic circuit, such as a central processing unit (CPU) or a micro processing unit (MPU); or an integrated circuit, such as an application specific integrated circuit (ASIC) or a field programmable gate array (FPGA).

### 2-2-3-1. Collection Unit 13a

The collection unit 13a collects various kinds of information. The collection unit 13a may store the various kinds of information collected, into the storage unit 12. The following description is on on-site data collection processing.

### On-Site Data Collection Processing

The collection unit 13a executes on-site data collection processing. For example, the collection unit 13a collects on-site data from each hierarchical layer of the organization to be managed. In collecting the on-site data, for example, the collection unit 13a collects on-site data of the fourth hierarchical layer L4 of the five layer process manufacturing pyramid from the block manager terminals of the people B in charge of blocks. Furthermore, for example, the collection unit 13a collects on-site data of the third hierarchical layer L3 of the five layer process manufacturing pyramid from the plant manager terminals of the people P in charge of plants. Furthermore, for example, the collection unit 13a collects on-site data of the second hierarchical layer L2 of the five layer process manufacturing pyramid from the work operation manager terminals of the people W in charge of work operations. Furthermore, for example, the collection unit 13a collects on-site data of the first hierarchical layer L1 of the five layer process manufacturing pyramid from the on-site devices D. The collection unit 13a may collect on-site data of the hierarchical layers of the five layer process manufacturing pyramid respectively from databases storing the on-site data of the hierarchical layers.

The collection unit 13a collects first on-site data from each hierarchical layer of the organization to be managed, the organization not having been managed according to first on-site policies yet. In a specific example of on-site data collection processing for the first on-site data, the collection unit 13a collects, as on-site data of the fourth hierarchical layer L4 of the five layer process manufacturing pyramid identified by "site #1-1", on-site data, "on-site data #1-1-1", corresponding to a stage where the people B in charge of blocks have not been notified of on-site policies yet and the fourth hierarchical layer L4 has not been managed according to the on-site policies yet, and the collection unit 13a stores the collected on-site data into the on-site data storage unit 12a. Furthermore, the collection unit 13a collects, as on-site data of the third hierarchical layer L3 of the five layer process manufacturing pyramid identified by "site #1-2", on-site data, "on-site data #1-2-1", corresponding to a stage where the people P in charge of plants have not been notified of on-site policies yet and the third hierarchical layer L3 has not been managed according to the on-site policies yet, and the collection unit 13a stores the collected on-site data into the on-site data storage unit 12a. Furthermore, the collection unit 13a collects, as on-site data of the second hierarchical layer L2 of the five layer process manufacturing pyramid identified by "site #1-3", on-site data, "on-site data #1-3-1", corresponding to a stage where the people W in charge of work operations have not been notified of on-site policies yet and the second hierarchical layer L2 has not been managed according to the on-site policies yet, and the collection unit 13a stores the collected on-site data into the on-site data storage unit 12a.

Furthermore, the collection unit 13a collects second on-site data from each hierarchical layer of the organization to be managed, the organization having been managed according to the first on-site policies. In a specific example of on-site data collection processing for the second on-site data, the collection unit 13a collects, as on-site data of the fourth hierarchical layer L4 of the five layer process manufacturing pyramid identified by "site #1-1", on-site data, "on-site data #1-1-2", corresponding to a stage where the people B in charge of blocks have been notified of the on-site policies and the fourth hierarchical layer L4 has been managed according to the on-site policies, and the collection unit 13a stores the collected on-site data into the on-site data storage unit 12a. Furthermore, the collection unit 13a collects, as on-site data of the third hierarchical layer L3 of the five layer process manufacturing pyramid identified by "site #1-2", on-site data, "on-site data #1-2-2", corresponding to the stage where the people P in charge of plants have been notified of the on-site policies and the third hierarchical layer L3 has been managed according to the on-site policies, and the collection unit 13a stores the collected on-site data into the on-site data storage unit 12a. Furthermore, the collection unit 13a collects, as on-site data of the second hierarchical layer L2 of the five layer process manufacturing pyramid identified by "site #1-3", on-site data, "on-site data #1-3-2", corresponding to the stage where the people W in charge of work operations have been notified of the on-site policies and the second hierarchical layer L2 has been managed according to the on-site policies, and the collection unit 13a stores the collected on-site data into the on-site data storage unit 12a.

### 2-2-3-2. Reception Unit 13b

The reception unit 13b receives various kinds of information. The reception unit 13b may store the received various kinds of information into the storage unit 12. The following description is on management policy reception processing.

### Management Policy Reception Processing

The reception unit 13b executes management policy reception processing. For example, the reception unit 13b collects on-site data from the person in charge of the organization of the organization to be managed. In collecting the on-site data, for example, the reception unit 13b receives management policies determined by the person O in charge of the enterprise, from the enterprise manager terminal of the person O in charge of the enterprise included in the fifth hierarchical layer L5 of the five layer process manufacturing pyramid.

The reception unit 13b receives a first management policy indicating a course of action of the overall management of the organization to be managed, from the person in charge of the organization. In a specific example of management policy reception processing for the first management policy, the reception unit 13b receives, as a management policy indicating a course of action of the overall management of the five layer process manufacturing pyramid identified by "site #1", "management policy #1", transmitted from the enterprise manager terminal of the person O in charge of the enterprise, and outputs the received management policy to the analysis unit 13c.

Furthermore, the reception unit 13b receives, from the person in charge of the organization, a second management policy indicating a course of action of the overall management of the organization to be managed, the second management policy having been changed according to the second on-site data. In a specific example of management policy reception processing for the second management policy, the reception unit 13b receives, as a management policy that has been changed indicating a course of action of the overall management of the five layer process manufacturing pyramid identified by "site #1", "management policy #1M", transmitted from the enterprise manager terminal of the person O in charge of the enterprise, and outputs the received management policy to the analysis unit 13c.

### 2-2-3-3. Analysis Unit 13c

The analysis unit 13c executes various analyses. The analysis unit 13c may store analysis results that have been output, into the storage unit 12. The analysis unit 13c may refer to various kinds of information stored in the storage unit 12. The following description is on management policy analysis processing.

### Management Policy Analysis Processing

The analysis unit 13c executes management policy analysis processing. For example, the analysis unit 13c analyzes management policies received by the reception unit 13b and on-site data collected by the collection unit 13a, and generates on-site policies to be presented to the on-site people in charge in the respective hierarchical layers of the organization to be managed.

The analysis unit 13c analyzes a first management policy that has been received and first on-site data collected from the hierarchical layers of the organization to be managed, and generates a first on-site policy indicating a course of action of management of each hierarchical layer. In a specific example of management policy analysis processing of generating the first on-site policy, the analysis unit 13c analyzes the first management policy, "management policy #1", output from the reception unit 13b and the onsite data, {site: "site #1-1", on-site data 1: "on-site data #1-1-1"}, {site: "site #1-2", on-site data 1: "on-site data #1-2-1"}, {site: "site #1-3", on-site data 1: "on-site data #1-3-1"}, ..., stored in the on-site data storage unit 12a. Furthermore, the analysis unit 13c generates, as first on-site policies, {site: "site #1-1", on-site policy 1: "on-site policy #1-1-1"}, {site: "site #1-2", "on-site policy 1": "on-site policy #1-2-1"}, {site: "site #1-3 ", on-site policy 1: "on-site policy #1-3-1"}, ... and stores the generated first on-site policies into the analysis result storage unit 12b.

The analysis unit 13c analyzes the first management policy received and second on-site data collected, and generates second on-site policies to be re-presented to the on-site people in charge. In a specific example of management policy analysis processing of generating the second on-site policies, the analysis unit 13c analyzes the management policy, "management policy #1", output from the reception unit 13b and analyzes the latest on-site data, {site: "site #1-1", on-site data 2: "on-site data #1-1-2"}, {site: "site #1-2", on-site data 2: "on-site data #1-2-2"}, {site: "site #1-3", on-site data 2: "on-site data #1-3-2"}, ..., stored in the on-site data storage unit 12a. Furthermore, the analysis unit 13c generates, as the second on-site policies, {site: "site #1-1", on-site policy 2: "on-site policy #1-1-2"}, {site: "site #1-2", on-site policy 2: "on-site policy #1-2-2"}, {site: "site #1-3", on-site policy 2: "on-site policy #1-3-2"}, ..., and stores the generated second on-site policies into the analysis result storage unit 12b.

The analysis unit 13c analyzes a second management policy that has been received and the second on-site data that have been collected, and generates second on-site policies to be re-presented to the on-site people in charge. In a specific example of management policy analysis processing of generating second on-site policies resulting from a change in the management policies, the analysis unit 13c analyzes the management policy, "management policy #1M", that has been changed and output from the reception unit 13b and the latest on-site data, {site: "site #1-1", on-site data 2: "on-site data #1-1-2"}, {site: "site #1-2", on-site data 2: "on-site data #1-2-2"}, {site: "site #1-3", on-site data 2: "on-site data #1-3-2"}, ..., stored in the on-site data storage unit 12a. Furthermore, the analysis unit 13c generates, as the second on-site policies resulting from the change in the management policies, {site: "site #1-1", on-site policy 2: "on-site policy #1M-1-2"}, {site: "site #1-2", on-site policy 2: "on-site policy #1M-2-2"}, {site: "site #1-3", on-site policy 2: "on-site policy #1M-3-2"}, ..., and stores the generated second on-site policies into the analysis result storage unit 12b.

The analysis unit 13c performs analyses using an analysis model M that executes reinforcement learning. For example, the analysis unit 13c inputs a management policy and on-site data into an analysis model M that has executed reinforcement learning so that a reward value calculated by use of a predetermined reward function is maximized, and obtains on-site policies for the respective hierarchical layers output by the analysis model M. Furthermore, the analysis unit 13c adjusts various parameters of the analysis model M so that the reward value is maximized.

The analysis unit 13c performs analysis using an algorithm that executes ERP. For example, the analysis unit 13c generates on-site policies of the respective hierarchical layers from a management policy and on-site data by using the algorithm that executes ERP enabling allocation of management resources, such as human resources, material resources, and financial resources.

Furthermore, the analysis unit 13c is able to execute adjustment of each parameter according to a management policy by regarding each piece of data included in the management policy output from the reception unit 13b as an explanatory element. Furthermore, in referring to on-site data stored in the on-site data storage unit 12a, the analysis unit 13c is able to execute reading after CSV conversion of various files for element data required in analysis. Furthermore, the analysis unit 13c may adopt, in addition to or instead of the above described analysis using an analysis model M or an ERP algorithm, any of analysis techniques suitable for the state of the data, the analysis techniques including basic statistics, multivariate analysis, and data mining.

### 2-2-3-4. Notification Unit 13d

The notification unit 13d performs notification of various kinds of information. The notification unit 13d may refer to various kinds of information stored in the storage unit 12. The following description is on on-site policy notification processing and on-site data notification processing.

### On-Site Policy Notification Processing

The notification unit 13d executes on-site policy notification processing. For example, the notification unit 13d notifies the hierarchical layers in the organization to be managed of on-site policies. In this notification, for example, the notification unit 13d transmits an on-site policy of the fourth hierarchical layer L4 of the five layer process manufacturing pyramid to the block managed terminals of the people B in charge of blocks and causes the on-site policy to be displayed on their monitors. Furthermore, for example, the notification unit 13d transmits an on-site policy of the third hierarchical layer L3 of the five layer process manufacturing pyramid to the plant manager terminals of the people P in charge of plants and causes the on-site policy to be displayed on their monitors. Furthermore, for example, the notification unit 13d transmits an on-site policy of the second hierarchical layer L2 of the five layer process manufacturing pyramid to the work operation manager terminals of the people W in charge of work operations and causes the on-site policy to be displayed on their monitors.

The notification unit 13d notifies each on-site person in charge in each hierarchical layer in the organization to be managed, of a first on-site policy generated. In a specific example of on-site policy notification processing for the first on-site policy, the notification unit 13d refers to, as an on-site policy of the fourth hierarchical layer L4 of the five layer process manufacturing pyramid identified by "site #1-1 ", the on-site policy, {site: "site #1-1", on-site policy 1: "on-site policy #1-1-1"}, stored in the analysis result storage unit 12b, transmits the on-site policy to the block manager terminals of the people B in charge of blocks, and causes the on-site policy to be displayed on their monitors. Furthermore, the notification unit 13d refers to, as an on-site policy of the third hierarchical layer L3 of the five layer process manufacturing pyramid identified by "site #1-2", the on-site policy, {site: "site #1-2", on-site policy 1: "on-site policy #1-2-1"}, stored in the analysis result storage unit 12b, transmits the on-site policy to the plant manager terminals of the people P in charge of plants, and causes the on-site policy to be displayed on their monitors. Furthermore, the notification unit 13d refers to, as an on-site policy of the second hierarchical layer L2 of the five layer process manufacturing pyramid identified by "site #1-3", the on-site policy, {site: "site #1-3", on-site policy 1: "on-site policy #1-3-1"}, stored in the analysis result storage unit 12b, transmits the on-site policy to the work operation manager terminals of the people W in charge of work operations, and causes the on-site policy to be displayed on their monitors.

The notification unit 13d notifies each on-site person in charge in each hierarchical layer in the organization to be managed, of a second on-site policy generated. In a specific example of on-site policy notification processing for the second on-site policy, the notification unit 13d refers to, as an up-to-date on-site policy of the fourth hierarchical layer L4 of the five layer process manufacturing pyramid identified by "site #1-1", the on-site policy, {site: "site #1-1", on-site policy 2: "on-site policy #1-1-2"}, stored in the analysis result storage unit 12b, transmits the on-site policy to the block manager terminals of the people B in charge of blocks, and causes the on-site policy to be displayed on their monitors. Furthermore, the notification unit 13d refers to, as an up-to-date on-site policy of the third hierarchical layer L3 of the five layer process manufacturing pyramid identified by "site #1-2", the on-site policy, {site: "site #1-2", on-site policy 2: "on-site policy #1-2-2"}, stored in the analysis result storage unit 12b, transmits the on-site policy to the plant manager terminals of the people P in charge of plants, and causes the on-site policy to be displayed on their monitors. Furthermore, the notification unit 13d refers to, as an up-to-date on-site policy of the second hierarchical layer L2 of the five layer process manufacturing pyramid identified by "site #1-3", the on-site policy, {site: "site #1-3", on-site policy 2: "on-site policy #1-3-2"}, stored in the analysis result storage unit 12b, transmits the on-site policy to the work operation manager terminals of the people W in charge of work operations, and causes the on-site policy to be displayed on their monitors.

In a specific example of on-site policy notification processing for a second on-site policy resulting from a change in management policies, the notification unit 13d refers to, as an on-site policy resulting from the change in the management policies and being for the fourth hierarchical layer L4 of the five layer process manufacturing pyramid identified by "site #1-1", the on-site policy, {site: "site #1-1", on-site policy 2: "on-site policy #1M-1-2"}, stored in the analysis result storage unit 12b, transmits the on-site policy to the block manager terminals of the people B in charge of blocks, and causes the on-site policy to be displayed on their monitors. Furthermore, the notification unit 13d refers to, as an on-site policy resulting from the change in the management policies and being for the third hierarchical layer L3 of the five layer process manufacturing pyramid identified by "site #1-2", the on-site policy, {site: "site #1-2", on-site policy 2: "on-site policy #1M-2-2"}, stored in the analysis result storage unit 12b, transmits the on-site policy to the plant manager terminals of the people P in charge of plants, and causes the on-site policy to be displayed on their monitors. Furthermore, the notification unit 13d refers to, as an on-site policy resulting from the change in the management policies and being for the second hierarchical layer L2 of the five layer process manufacturing pyramid identified by "site #1-3", the on-site policy, {site: "site #1-3", on-site policy 2: "on-site policy #1M-3-2"}, stored in the analysis result storage unit 12b, transmits the on-site policy to the work operation manager terminals of the people W in charge of work operations, and causes the on-site policy to be displayed on their monitors.

### On-Site Data Notification Processing

The notification unit 13d executes on-site data notification processing. For example, the notification unit 13d notifies the person in charge of the organization of second on-site data collected. In this notification, for example, the notification unit 13d transmits the latest on-site data of the fourth hierarchical layer L4, the third hierarchical layer L3, and the second hierarchical layer L2, of the five layer process manufacturing pyramid, to the enterprise manager terminal of the person O in charge of the enterprise, and causes the latest on-site data to be displayed on its monitor.

In a specific example of the on-site data notification processing, the notification unit 13d refers to, as the latest on-site data of the fourth hierarchical layer L4, the third hierarchical layer L3, and the second hierarchical layer L2, of the five layer process manufacturing pyramid identified by "site #1", the on-site data, {site: "site #1-1", on-site data 2: "on-site data #1-1-2"}, {site: "site #1-2", on-site data 2: "on-site data #1-2-2"}, and {site: "site #1-3", on-site data 2: "on-site data #1-3-2"}, stored in the on-site data storage unit 12a, transmits the on-site data to the enterprise manager terminal of the person O in charge of the enterprise, and causes the on-site data to be displayed on its monitor.

### 3. Flow of Processing by Decision Making Support System 100

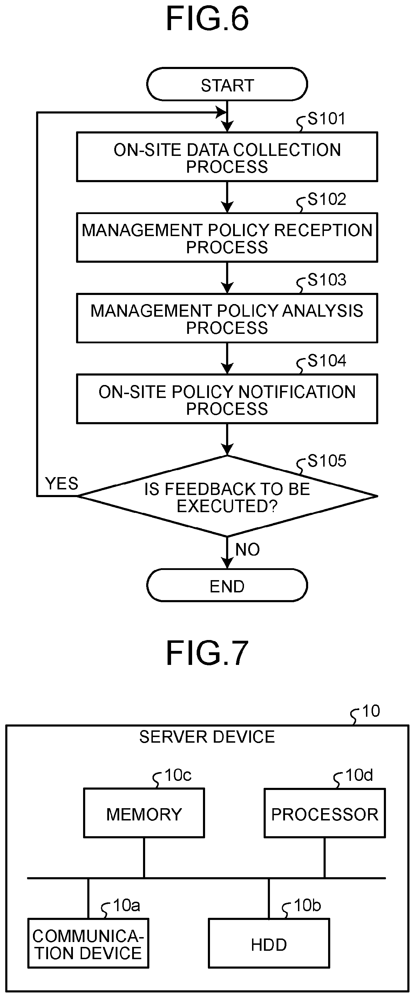

A flow of processing by the decision making support system 100 according to the embodiment will be described by use of FIG. 6. FIG. 6 is a flowchart illustrating an example of the flow of the processing by the decision making support system 100 according to the embodiment. Processing from Step S101 to Step S105 described below may be executed in a different sequence. Furthermore, any part of the processing from Step S101 to Step S105 may be omitted.

### 3-1. On-Site Data Collection Processing

Firstly, the server device 10 executes on-site data collection processing (Step S101). For example, the server device 10 collects on-site data from each hierarchical layer of the five layer process manufacturing pyramid. The server device 10 may notify the person O in charge of the enterprise in the five layer process manufacturing pyramid of the on-site data collected.

### 3-2. Management Policy Reception Processing

Secondly, the server device 10 executes management policy reception processing (Step S102). For example, the server device 10 receives a management policy from the person O in charge of the enterprise in the five layer process manufacturing pyramid.

### 3-3. Management Policy Analysis Processing

Thirdly, the server device 10 executes management policy analysis processing (Step S103). For example, the server device 10 executes analysis of the management policy and the onsite data, and generates on-site policies to be presented to the on-site people in charge in the hierarchical layers of the five layer process manufacturing pyramid.

### 3-4. On-Site Policy Notification Processing

Fourthly, the server device 10 executes on-site policy notification processing (Step S104). For example, the server device 10 notifies the hierarchical layers in the five layer process manufacturing pyramid of the on-site policies.

### 3-5. Feedback Execution Determination Processing

Fifthly, the server device 10 executes feedback execution determination processing (Step S105). For example, in a case where feedback is to be executed (Step S105: Yes) the server device 10 executes the processing at Step S101 again to collect the latest on-site data from each hierarchical layer of the five layer process manufacturing pyramid and notify the person O in charge of the enterprise, of the latest on-site data collected, executes the processing at Step S102 again to receive an up-to-date management policy from the person O in charge of the enterprise in the five layer process manufacturing pyramid, executes the processing at Step S103 again to generate up-to-date on-site policies to be presented to the on-site people in charge in the hierarchical layers of the five layer process manufacturing pyramid, and executes the processing at Step S104 again to notify the hierarchical layers in the five layer process manufacturing pyramid of the up-to-date onsite policies. On the contrary, in a case where feedback is not to be executed (Step S105: No), the server device 10 ends processing.

### 4. Effects of Embodiment

Effects of the embodiment will be described lastly. The following description is on a first effect to an eighth effect corresponding to the processing according to the embodiment.

### 4-1. First Effect

Firstly, in the above described processing according to the embodiment, the server device 10 receives a first management policy indicating a course of action of overall management of an organization to be managed, from a person in charge of the organization, analyzes the first management policy received and first on-site data collected from each hierarchical layer of the organization to be managed, generates a first on-site policy indicating a course of action of management of each hierarchical layer of the organization to be managed, and notifies each on-site person in charge in each hierarchical layer in the organization to be managed, of the first on-site policy generated. Therefore, this processing enables reflection of management policies of a person in charge of an organization, in each hierarchical layer of the organization to be managed.

### 4-2. Second Effect

Secondly, in the above described processing according to the embodiment, the server device 10 collects second on-site data from each hierarchical layer of the organization to be managed, the hierarchical layer having been managed according to the first on-site policy, and notifies the person in charge of the organization, of the second on-site data collected. Therefore, this processing enables, in addition to reflection of management policies of a person in charge of an organization in each hierarchical layer of the organization to be managed, feedback to the person in charge of the organization.

### 4-3. Third Effect

Thirdly, in the above described processing according to the embodiment, the server device 10 analyzes the first management policy received and the second on-site data collected, generates second on-site policies to be re-presented to on-site people in charge in the hierarchical layers of the organization to be managed, and respectively notifies the on-site people in charge, of the second on-site policies generated. Therefore, this processing enables reflection of management policies of a person in charge of an organization, in each hierarchical layer of the organization to be managed, on the basis of the latest on-site data.

### 4-4. Fourth Effect

Fourthly, in the above described processing according to the embodiment, the server device 10 receives, from the person in charge of the organization, a second management policy indicating a course of action of the overall management of the organization to be managed, the second management policy having been changed according to the second on-site data, analyzes the second management policy received and the second on-site data collected, generates second on-site policies to be re-presented to the on-site people in charge in the hierarchical layers of the organization to be managed, and respectively notifies the on-site people in charge, of the second on-site policies generated. Therefore, this processing enables reflection of modified management policies of a person in charge of an organization, in each hierarchical layer of the organization to be managed, on the basis of the latest on-site data.

### 4-5. Fifth Effect

Fifthly, in the above described processing according to the embodiment, the server device 10 performs analysis by using an analysis model that executes reinforcement learning. Therefore, this processing enables, in addition to, reflection of management policies of a person in charge of an organization in each hierarchical layer of the organization to be managed, improvement in precision every time feedback is repeated.

### 4-6. Sixth Effect

Sixthly, in the above described processing according to the embodiment, the server device 10 performs analysis by using an algorithm that executes ERP. Therefore, this processing enables reflection of management policies of a person in charge of an organization in each hierarchical layer of the organization to be managed, the management policies being related to allocation of management resources.

### 4-7. Seventh Effect

Seventhly, in the above described processing according to the embodiment, the organization to be managed belongs to a manufacturing industry. Therefore, this processing enables reflection of management policies of a person in charge of an organization of a manufacturing enterprise, in each hierarchical layer of the organization to be managed.

### 4-8. Eighth Effect

Eighthly, in the above described processing according to the embodiment, each hierarchical layer of the organization to be managed belongs to a five layer process manufacturing pyramid. Therefore, this processing enables reflection of the management policies of the person in charge of the organization, in each of the fourth hierarchical layer L4, the third hierarchical layer L3, and the second hierarchical layer L2, of the organization to be managed, the person belonging to the fifth hierarchical layer L5.

### 5. System

The processing steps, control steps, specific names, and information including various data and parameters, which have been described above and illustrated in the drawings may be modified in any way unless particularly stated otherwise.

Furthermore, the components of each apparatus/device in the drawings have been illustrated functionally and/or conceptually, and do not need to be physically configured as illustrated in the drawings. That is, specific modes of separation and integration of each apparatus/device are not limited to those illustrated in the drawings. That is, all or part of each apparatus/device may be configured by being functionally or physically separated or integrated in any units according to various loads and use situations.

Furthermore, all or any part of the processing functions performed in the apparatuses/devices may be implemented by a CPU and a program analyzed and executed by the CPU, or may be implemented as hardware by wired logic.

### 6. Hardware

An example of a hardware configuration of the server device 10 that is an information providing apparatus will be described next. Any of the other apparatuses/devices may have a similar hardware configuration. FIG. 7 is a diagram illustrating an example of a hardware configuration according to the embodiment. As illustrated in FIG. 7, the server device 10 has a communication device 10a, a hard disk drive (HDD) 10b, a memory 10c, and a processor 10d. These units illustrated in FIG. 7 are connected to one another via a bus, for example.

The communication device 10a is, for example, a network interface card, and performs communication with another server. The HDD 10b stores a database and a program that causes the functions illustrated in FIG. 2 to operate.

The processor 10d causes a process to be operated, the process executing the functions described by reference to FIG. 2, for example, by: reading, from the HDD 10b, the program that executes the same processing as the processing units illustrated in FIG. 2; and loading the program into the memory 10c. For example, this process executes the same functions as the processing units that the server device 10 has. Specifically, the processor 10d reads a program having the same functions as the collection unit 13a, the reception unit 13b, the analysis unit 13c, and the notification unit 13d, from the HDD 10b, for example. The processor 10d then executes a process that executes the same processing as the collection unit 13a, the reception unit 13b, the analysis unit 13c, and the notification unit 13d, for example.

Accordingly, the server device 10 operates as an apparatus that executes various processing methods by reading and executing the program. Furthermore, the server device 10 may implement the same functions as the above described embodiment by reading the program from a recording medium by means of a medium reading device and executing the program read. The program referred to herein is not limited to being executed by the server device 10. For example, the present invention may be similarly applied to a case where another computer or a server executes the program, or a case where the computer and the server execute the program in corporation with each other.

This program may be distributed via a network, such as the Internet. Furthermore, the program may be executed by being recorded in a computer-readable recording medium, such as a hard disk, a flexible disk (FD), a CD-ROM, a magneto-optical (MO) disk, or a digital versatile disc (DVD) and being read from the recording medium by a computer.

The present invention has an effect of enabling reflection of management policies of a person in charge of an organization, in each hierarchical layer of the organization to be managed.

## Claims

1. An information providing apparatus (10), comprising:
a reception unit (13b) that receives a first management policy indicating a course of action of overall management of an organization to be managed, from a person in charge of the organization;
an analysis unit (13c) that analyzes the first management policy received and first on-site data collected from each hierarchical layer of the organization to be managed, and generates a first on-site policy indicating a course of action of management of the each hierarchical layer; and
a notification unit (13d) that notifies each on-site person in charge in the each hierarchical layer, of the first on-site policy generated.

2. The information providing apparatus (10) according to claim 1, further comprising:
a collection unit (13a) that collects second on-site data from the each hierarchical layer that has been managed according to the first on-site policy, wherein
the notification unit (13d) notifies the person in charge of the organization, of the second on-site data collected.

3. The information providing apparatus (10) according to claim 2, wherein
the analysis unit (13c) analyzes the first management policy received and the second on-site data collected, and generates a second on-site policy to be re-presented to the on-site person in charge, and
the notification unit (13d) notifies the each on-site person in charge, of the second on-site policy generated.

4. The information providing apparatus (10) according to claim 2, wherein
the reception unit (13b) receives, from the person in charge of the organization, a second management policy indicating a course of action of the overall management of the organization to be managed, the second management policy having been changed according to the second on-site data,
the analysis unit (13c) analyzes the second management policy received and the second on-site data collected, and generates a second on-site policy to be re-presented to the on-site person in charge, and
the notification unit (13d) notifies the each on-site person in charge, of the second on-site policy generated.

5. The information providing apparatus (10) according to any one of claims 1 to 4, wherein the analysis unit (13c) performs analysis by using an analysis model that executes reinforcement learning.

6. The information providing apparatus (10) according to any one of claims 1 to 5, wherein the analysis unit (13c) performs analysis by using an algorithm that executes enterprise resource planning (ERP).

7. The information providing apparatus (10) according to any one of claims 1 to 6, wherein the organization to be managed belongs to a manufacturing industry.

8. The information providing apparatus (10) according to any one of claims 1 to 7, wherein the each hierarchical layer belongs to a five layer process manufacturing pyramid.

9. An information providing method, wherein a computer (10) executes processing comprising:
receiving a first management policy indicating a course of action of overall management of an organization to be managed, from a person in charge of the organization;
analyzing the first management policy received and first on-site data collected from each hierarchical layer of the organization to be managed, and generating a first on-site policy indicating a course of action of management of the each hierarchical layer; and
notifying each on-site person in charge in the each hierarchical layer, of the first on-site policy generated.

10. An information providing program that causes a computer (10) to execute processing comprising:
receiving a first management policy indicating a course of action of overall management of an organization to be managed, from a person in charge of the organization;
analyzing the first management policy received and first on-site data collected from each hierarchical layer of the organization to be managed, and generating a first on-site policy indicating a course of action of management of the each hierarchical layer; and
notifying each on-site person in charge in the each hierarchical layer, of the first on-site policy generated.
